# EUROPÄISCHE PATENTSCHRIFT

(11) **EP 1 591 284 B1**
(45) Veröffentlichungstag und Bekanntmachung des Hinweises auf die Patenterteilung: **23.08.2006**
(21) Anmeldenummer: 04030039.4
(22) Anmeldetag: 17.12.2004
(51) Int. Cl.: B60H 1/22, B60H 1/00

(54) **Fahrzeugheizsystem und Verfahren zum Betreiben eines Fahrzeugsheizsystems**
Vehicle heating system and method for operating a vehicle heating system
Système de chauffage de véhicule et méthode d'utilisation d'un système de chauffage de véhicule

(30) Priorität: 28.04.2004 DE 102004020715
(43) Veröffentlichungstag der Anmeldung: 02.11.2005
(73) Patentinhaber: J. Eberspächer GmbH & Co. KG, 73730 Esslingen (DE)
(72) Erfinder: Pfister, Wolfgang, 73732 Esslingen (DE); Keefer, Jörg, 71384 Weinstadt (DE); Hermann, Alexander, 73666 Baltmannsweiler (DE)
(74) Vertreter: Ruttensperger, Bernhard

(56) Entgegenhaltungen:
- DE-A1- 3 423 466
- DE-A1- 4 438 277
- DE-C1- 4 140 804

## Beschreibung

Die vorliegende Erfindung betrifft ein Fahrzeugheizsystem, umfassend ein Heizgerät mit einem Brennerbereich zur Verbrennung von Brennstoff und mit einem Wärmetauscherbereich zur Übertragung von bei der Verbrennung erzeugter Wärme auf ein zu erwärmendes Medium, sowie ein Ansteuergerät zur Ansteuerung des Heizgeräts, gemäß dem Oberbegriff des Anspruchs 1.

Brennstoffbetriebene Fahrzeugheizsysteme, wie sie beispielsweise als Standheizungen oder auch als Zuheizer eingesetzt werden, unterliegen über ihre Betriebslebensdauer hinweg einem Verschleiß. Dieser Verschleiß involviert im Wesentlichen die in einer Brennkammer im Verbrennungsbetrieb sich niederschlagenden Ablagerungen und die durch die starke thermische Belastung entstehende Alterung eines Zündorgans, beispielsweise eines Glühzündstifts. Derartige Ablagerungen oder die starke Alterung des Zündorgans können dazu führen, dass die Leistungsfähigkeit des Heizgeräts abnimmt, können aber auch zu einem Totalausfall führen.

Ein System gemäß dem Oberbegriff des Anspruchs 1 ist aus der DE 298 12 993 U1 bekannt. Bei diesem bekannten System wird eine die Betriebsdauer eines Systems repräsentierende Größe "Laufzeit" mit einer als "Zeitparameter" bezeichneten Referenzgröße verglichen, um bei Übereinstimmung einen Hinweis zu geben, dass eine Wartung durchgeführt werden soll. Dabei kann weiter berücksichtigt werden, dass während verschiedener Betriebszeiten verschieden hohe Belastungen des Systems vorliegen, also insbesondere mit verschiedener Heizleistung gearbeitet wird. Dies wird dadurch berücksichtigt, dass die mit einzelnen Heizleistungen in Zusammenhang stehenden zugeordneten Betriebszeiten mit unterschiedlichen Faktoren gewichtet werden, so dass eine auf der Grundlage der vorhandenen variierenden Heizleistung gewertete Größe "Laufzeit" mit der fest vorgegebenen Referenzgröße "Zeitparameter" verglichen wird.

Aus der DE 44 38 277 A1 ist es bekannt, den Betrieb eines Fahrzeugheizgeräts mit einem Diagnosesystem zu überwachen und dabei mit dem Betrieb in Zusammenhang stehende Größen zu erfassen bzw. aufzuzeichnen. Bei Auftreten von Funktionsstörungen bzw. Fehlern kann dann anhand der aufgezeichneten Größen eine Auswertung vorgenommen werden bzw. ermittelt werden, welche Umstände zum Auftreten eines Fehlers geführt haben.

Es ist die Aufgabe der vorliegenden Erfindung, ein Fahrzeugheizsystem vorzusehen, in welchem die Überwachung hinsichtlich einer durchzuführenden Wartung in verbesserter Art und Weise vorgenommen werden kann.

Erfindungsgemäß wird diese Aufgabe durch das in Anspruch 1 definierte Fahrzeugheizsystem gelöst.

Das ständige Überwachen des Betriebs des Heizgerätes und das Vergleichen mit Referenzgrößen ermöglicht es, rechtzeitig einen Benutzer darauf hinzuweisen, dass das System in einen Zustand gelangt ist oder demnächst gelangen wird, der hinsichtlich des Auftretens von Defekten kritisch ist und daher die Durchführung einer Wartung erfordert. Somit können rechtzeitig Maßnahmen ergriffen werden, um beispielsweise stark gealterte, verunreinigte oder in sonstiger Weise beeinträchtigte Systemkomponenten gegen neue zu ersetzen oder ggf. wieder aufzubereiten, so dass auch weiterhin ein geeigneter Betrieb sichergestellt werden kann.

Allgemein ist bei dem erfindungsgemäßen System vorgesehen, dass die Überwachungsmittel dazu ausgebildet sind, die Gesamtbetriebsdauer des Heizgeräts betreffende Betriebsdauerinformation bereitszustellen, und dass die Informationsmittel dazu ausgebildet sind, die Betriebsdauerinformation mit einer Referenzbetriebsdauerinformation zu vergleichen und in Abhängigkeit von dem Vergleich die Wartungsinformation zu erzeugen. Durch diese Maßnahme werden vor allem die hinsichtlich ihrer Alterung bzw. Abnutzung stark beanspruchten Systembereiche des Heizgeräts einzeln überwacht, um dann bei entsprechendem Überwachungsergebnis rechtzeitig geeignete Wartungshinweise erzeugen zu können. Dabei ist vorgesehen, dass die Betriebsdauerinformation umfasst:
- Information über die Gesamtbrenndauer des Brennerbereichs und optional
- Information über die Anzahl an durch Aktivieren eines Zündorgans durchgeführten Zündvorgängen,
und dass die Referenzbetriebsdauerinformation umfasst:
- Information über eine Referenzgesamtbetriebsdauer und optional
- Information über eine Referenzzündvorgangsanzahl,
wobei die Informationsmittel dazu ausgebildet sind, die Information über die

Gesamtbrenndauer mit der Information über die Referenzgesamtbrenndauer zu vergleichen und bei Übereinstimmung Wartungsinformation zu erzeugen, und gegebenenfalls die Information über die Anzahl an Zündvorgängen mit der Referenzzündvorgangsanzahl zu vergleichen und bei Übereinstimmung Wartungsinformation zu erzeugen.

Insbesondere im Brennerbereich ist die dort entstehende Beanspruchung stark von der Art und Weise abhängig, wie über die Betriebslebensdauer hinweg das Heizgerät betrieben wird. So besteht beispielsweise bei verschiedenen Brennertypen bei vergleichsweise geringer Last- bzw. Brennerleistung eine größere Gefahr, dass Ablagerungen erzeugt werden, als bei höherer Brennerleistung. Bei anderen Brennertypen ist dieser Zusammenhang umgekehrt, so dass die Gefahr von Ablagerungen bei geringerer Brennerleistung kleiner ist, als bei größerer Brennerleistung. Um dies berücksichtigen zu können, ist weiter vorgesehen, dass die Information über die Gesamtbrenndauer Information über die Anteile verschiedener Brennerleistungsstufen an der Gesamtbrenndauer enthält. Dabei ist dann weiter vorgesehen, dass die Referenzbrenndauerinformation unterschiedliche Referenzbrenndauem für verschiedene Zusammensetzungen der Gesamtbrenndauer hinsichtlich der Anteile verschiedener Brennerleistungsstufen umfasst.

Wie vorangehend beschrieben, wird in Abhängigkeit von einer ständig stattfindenden Überwachung des Systems rechtzeitig Information über eine durchzuführende Wartung bereitgestellt werden. Um einem Benutzer eines derartigen Systems die Möglichkeit zu geben, jederzeit Information über den aktuellen Zustand des Systems und in Zukunft möglicherweise durchzuführende Wartungsarbeiten zu erlangen, wird weiter vorgeschlagen, dass das Ansteuergerät Wartungsanzeigeaktivierungsmittel umfasst, um nach manueller Erzeugung eines Anzeigebefehls Information über den momentanen Zustand des Heizgeräts zu erzeugen. Dies gestattet es beispielsweise einem Benutzer im Sommer, d.h. also einer Phase, in welcher eine Standheizung im Allgemeinen über eine längere Zeitdauer nicht betrieben wird, bereits zu erkennen, dass demnächst Wartungsarbeiten fällig werden. Er kann dann in dieser Zeitdauer, in welcher im Allgemeinen auch die Ersatzteilebeschaffung leichter zu realisieren ist, die erforderlichen Arbeiten vornehmen lassen.

Die vorliegende Erfindung wird nachfolgend mit Bezug auf die beiliegenden Zeichnungen detailliert beschrieben. Es zeigt:
- Fig. 1: eine Prinzipdarstellung eines erfindungsgemäßen Heizsystems;
- Fig. 2: einen Zusammenhang zwischen der Heizleistung und der Stundenlaufzeit hinsichtlich der Auswahl einer Referenzbrenndauer.

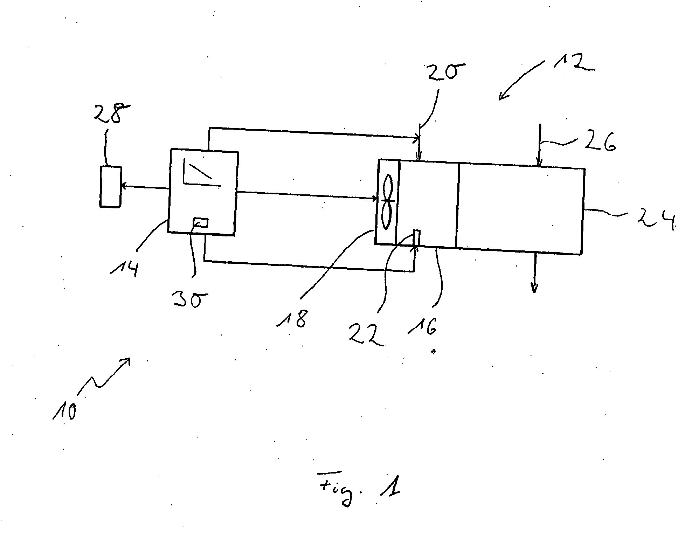

In Fig. 1 ist ein erfindungsgemäßes Fahrzeugheizsystem allgemein mit 10 bezeichnet. Dieses Heizsystem 10 umfasst ein Heizgerät 12, das zum Betreiben desselben allgemein unter der Ansteuerung eines Ansteuergeräts 14 steht.

Das Heizgerät 12 ist grundsätzlich von herkömmlichem Aufbau und umfasst einen Brennerbereich 16. Diesem wird über ein Verbrennungsluftgebläse 18 die zur Verbrennung erforderliche Luft zugeführt, und wird über eine Brennstoffzuführung 22 der zur Verbrennung erforderliche Brennstoff allgemein in flüssiger Form zugeführt. Im Brennerbereich 16 wird dann ein verbrennungsfähiges bzw. zündfähiges Verbrennungsluft/Brennstoff-Gemisch erzeugt, das durch Aktivierung eines Zündorgans 22, beispielsweise Glühzündstift, zur Zündung und somit Verbrennung gebracht wird. Die bei der Verbrennung entstehende Wärme wird in einem Wärmetauscherbereich 24 auf ein diesem ebenfalls zugeführtes zu erwärmendes Medium 26, beispielsweise Luft oder Wasser, übertragen.

Die verschiedenen zum Betreiben des Heizgeräts 12 zu aktivierenden Systembereiche, wie Verbrennungsluftgebläse 18, Brennstoffzufuhr 20 und Zündorgan 22, stehen unter der Ansteuerung des Ansteuergeräts 14. Je nach geforderter Betriebsart bzw. Brennerleistung steuert das Ansteuergerät 14 die angesprochenen Systembereiche an, beispielsweise durch Anlegen entsprechender Betriebsspannungen an Motoren, Pumpen bzw. eine Heizwendel des Zündorgans 22.

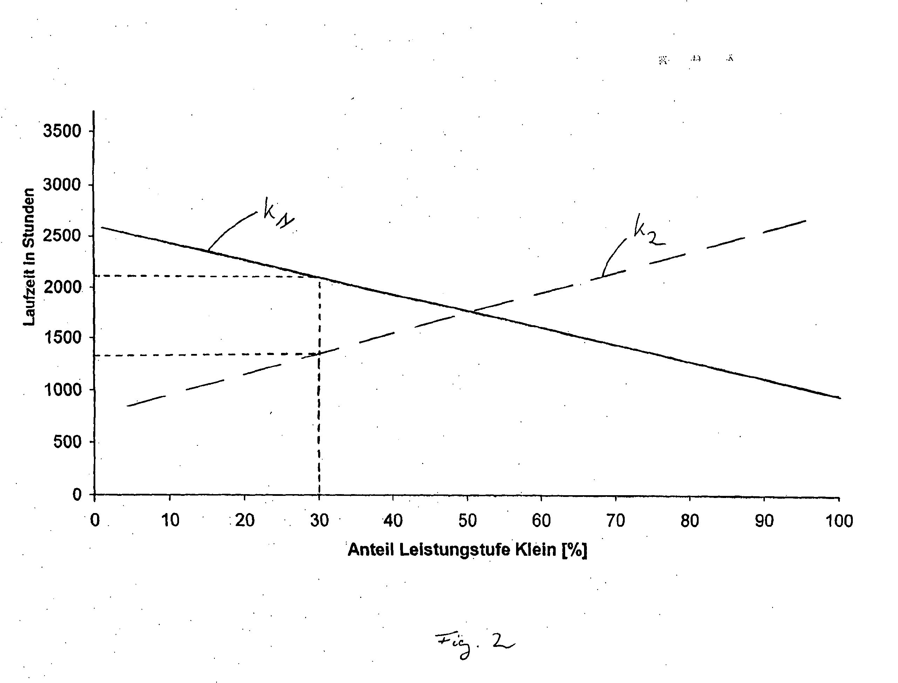

Das Ansteuergerät 14 ist weiterhin dazu ausgebildet, den Betrieb des Heizgeräts 12 zu überwachen. So kann das Ansteuergerät 14 beispielsweise aufzeichnen, mit welcher Brennerleistung das Heizgerät 12 über welche Zeitdauer hinweg betrieben worden ist. Hier findet also eine ständige Überwachung des Zustandes des Heizgeräts 12 statt, um, wie im Folgenden dargelegt, rechtzeitig zu erkennen, wann verschiedene Systembereiche des Heizgeräts 12 aufgrund der bereits abgeleisteten Betriebsdauer in einen krititschen Zustand gelangen. Dies wird im Folgenden auch mit Bezug auf die Fig. 2 dargelegt.

Hinsichtlich einer Beeinträchtigung der Effizienz bzw. generell der Betriebsfähigkeit des Heizgeräts 12 sind vor allem das Zündorgan 22 und der Brennerbereich 16, also beispielsweise eine Brennkammer desselben, besonders kritisch. Durch die bei Zündvorgängen sehr starke thermische Belastung des Zündorgans 22 kann es, je nach Bauart, beispielsweise ab einer Anzahl von 1500 durchgeführten Zündvorgängen vermehrt zum Durchbrennen kommen. Die Folge davon ist, dass das Heizgerät 12 nicht mehr gestartet werden kann. Die bei der Verbrennung entstehenden Ablagerungen, die sich im Bereich der Brennkammer niederschlagen, können ebenfalls den Betrieb beeinträchtigen. Es wird daher im Folgenden angenommen, dass der Betrieb des Heizgeräts 12 durch das Ansteuergerät 14 dahingehend überwacht wird, wie viele Zündvorgänge durchgeführt worden sind und wie lange der Brennerbereich 16 betrieben worden ist bzw. bei welcher Leistung dieser betrieben worden ist. Hier sei in vereinfachter Art und Weise zunächst weiter angenommen, dass das Heizgerät 12 grundsätzlich mit zwei verschiedenen Leistungsstufen, also einer kleinen und einer größeren Leistungsstufe, betrieben werden kann.

Die vorangehend beschriebene, im Betrieb des Heizgeräts 12 permanent ablaufende Überwachung bzw. Dokumentation des Betriebs wird im Ansteuergerät 14 gespeichert und beispielsweise bei jedem Neustart des Heizgeräts 12 oder bei jedem Beenden des Betriebs mit einer Referenzinformation verglichen. Hinsichtlich des Zündorgans 22 kann diese Referenzinformation eine Referenzanzahl an Zündvorgängen umfassen, beispielsweise 1500. Die durch die Überwachung akkumulierte Anzahl an Zündvorgängen über die Betriebslebensdauer hinweg kann mit dieser Referenzgröße verglichen werden. Deutet der Vergleich darauf hin, dass die Referenzzahl erreicht ist, so kann das Ansteuergerät 14 eine entsprechende Information erzeugen bzw. eine Anzeige 28 ansteuern. An dieser Anzeige 28 kann dann beispielsweise Information zur Anzeige gebracht werden, die aussagt, dass eine Wartung des Heizgeräts 12 vorgenommen werden soll, beispielsweise dass das Zündorgan 22 ausgetauscht werden soll.

Hinsichtlich der Brennerbetriebsdauer kann beispielsweise überwacht werden, wie groß der Anteil der kleineren der angesprochenen Leistungsstufe an der Gesamtbetriebsdauer ist. Liegt dieser Anteil beispielsweise bei 30%, wie in Fig. 2 angedeutet, so kann, beruhend auf einer Kennlinie K₁ für einen ersten Heizgerätetyp als Referenzgesamtbrenndauer beispielsweise ein Wert von etwa 2100 Stunden festgelegt werden. Deutet die Überwachung darauf hin, dass diese 2100 Stunden Gesamtbrenndauer erreicht worden sind, so wird als Ergebnis dieses Vergleichs dann ebenfalls im Ansteuergerät 14 entsprechende Information erzeugt bzw. die Anzeige 28 dazu angesteuert, einen entsprechenden Wartungshinweis zu erzeugen.

Man erkennt in Fig. 2, dass die Kennlinie K₁ einen Zusammenhang darstellt, bei dem mit größerem Anteil der kleineren Leistungsstufe auch die bis zur Anzeige einer Wartung zu durchlaufende Gesamtbrenndauer abnimmt. Dies betrifft also den Typ eines Heizgeräts, bei dem die Gefahr von Ablagerungen bei kleinerer Brennerleistung größer ist, als bei größerer Brennerleistung. Mit Strichlinie ist eine Kennlinie K₂ für einen anderen Typ eines Heizgerätes dargestellt, bei dem dieser Zusammenhang umgekehrt ist. Hier ist die Gefahr von Ablagerungen dann größer, wenn der Anteil der kleineren Leistungsstufe abnimmt. So führt hier ein prozentualer Anteil der kleineren Leistungsstufe von 30% bereits bei etwa 1300 Betriebsstunden als entsprechender Referenzwert zur Ausgabe einer Wartungsinformation.

Der Anzeigebetrieb der verschiedenen Wartungsinformationen kann beispielsweise auch gestuft erfolgen. So könnte die Anzeige 28 ein Farbdisplay, beispielsweise auch als Balkenanzeige, umfassen, bei welchem bei Annähern an den Referenzwert bzw. einen maximal zulässigen Wert ein Farbwechsel beispielsweise von Grün in Richtung Rot durchlaufen wird.

Um dem Benutzer eines derartigen Systems die Möglichkeit zu geben, auch in Phasen, in welchen grundsätzlich noch keine Wartungsanzeige erforderlich ist und somit auch nicht erfolgt, sich über den Zustand des Heizgeräts 12 zu informieren, kann das Ansteuergerät 14 eine Taste 30 aufweisen, deren Betätigung zur Folge hat, dass dem Fahrer Information über den momentanen Zustand des Heizgerätes angezeigt wird. Diese Information kann beispielsweise die Angabe umfassen, wie lange das Heizgerät insgesamt betrieben worden ist oder wie viele Betriebsstunden bis zur Durchführung der nächsten Wartung noch realisierbar sind. So kann der Fahrer bereits rechtzeitig Maßnahmen ergreifen, auch wenn an sich das Durchführen einer Wartung noch nicht erforderlich ist.

Durch die erfindungsgemäß vorzunehmende Überwachung des Betriebs bzw. des Zustandes des Heizgeräts 12 wird es möglich, rechtzeitig funktionskritische Systembereiche zu erneuern, um somit ein Ausfall des Gesamtsystems vermeiden zu können. Ferner kann die im Ansteuergerät 14 abgelegte Information über den Betrieb des Heizgeräts 12 auch für den Hersteller derartiger Systeme hilfreich sein. So kann er daraus beispielsweise erkennen, wie primär solche Heizgeräte eingesetzt werden, also beispielsweise mit welcher Heizleistung hauptsächlich gearbeitet wird und welche Auswirkungen dies auf den Zustand der verschiedenen kritischen Systembereiche hat. Diese Information kann also grundsätzlich bei Durchführung einer Wartung ausgelesen werden und kann bei der weiteren Entwicklung derartiger Systeme hilfreich sein.

Es sei darauf hingewiesen, dass hinsichtlich der Brennerleistung so vorgegangen wird, dass verschiedenen Leistungsstufen unter Berücksichtigung dessen, wie kritisch hinsichtlich der Beanspruchung die verschiedenen Leistungsstufen sind, verschiedene Wertigkeiten zugeordnet werden. Über die Betriebslebensdauer hinweg können diese jeweils in Zuordnung zu Zeiteinheiten vorgesehenen Wertigkeiten dann aufsummiert werden, so dass ein vorgegebener Referenzwert beispielsweise dann früher erreicht wird, wenn das Heizgerät 12 verstärkt in einem hinsichtlich der Beanspruchung besonders kritischen Zustand betrieben wird. Weiter könnte berücksichtigt werden, dass ein kontinuierlicher Betrieb, also ein Betrieb primär bei einer Leistungsstufe, kritischer oder weniger kritisch ist, als ein Betrieb mit alternierendem Heizleistungsniveau. Auf diese Art und Weise wird es möglich, in Zuordnung zu verschiedenen Heizgerätetypen festzulegen, wann ein kritisches Niveau erreicht ist und somit eine Wartung durchgeführt werden soll. Auch andere Systembereiche, wie z.B. das Verbrennungsluftgebläse 18, können selbstverständlich hinsichtlich ihres Betriebs überwacht werden, um auch, sofern diese für den Betrieb in einen kritischen Zustand gelangen können, hier rechtzeitig Maßnahmen ergreifen zu können.

Zu den Ausdrücken "Gesamtbrenndauer" bzw. "Gesamtzündungsanzahl" bzw. "den zugeordneten Referenzwerten" sei ausgeführt, dass diese beispielsweise berechnet oder betrachtet werden können ab der ersten Inbetriebnahme eines derartigen Systems. Wäre also beispielsweise eine Wartung des Brennerbereichs nach 2000 Betriebsstunden durchzuführen, so könnte also ein erster Referenzwert bei 2000 Stunden gesetzt werden, während ein zweiter Referenzwert dann bei 4000 Betriebsstunden usw. gesetzt wäre. Alternativ könnte auch so vorgegangen werden, dass nach jedem Wartungsvorgang die Gesamtbrenndauer bzw. für die Wartungsanzeige relevante Gesamtbrenndauer wieder auf 0 oder einen Ausgangswert zurückgesetzt wird und dann wieder gezählt wird, bis beispielsweise der vorgegebene Referenzwert von 2000 Betriebsstunden erreicht ist. Grundsätzlich ist es auch denkbar, bei über die Gesamtbetriebslebensdauer hinweg wiederholt durchzuführenden Wartungsvorgängen, die beispielsweise das Wiederaufbereiten verschiedener Systembereiche involvieren, sofern dies erforderlich oder sinnvoll ist, das Wartungsintervall mit zunehmendem Alter zu verändern, also beispielsweise zu verkürzen.

## Patentansprüche

1. Fahrzeugheizsystem, umfassend:
- ein Heizgerät (12) mit einem Brennerbereich (16) zur Verbrennung von Brennstoff und mit einem Wärmetauscherbereich (24) zur Übertragung von bei der Verbrennung erzeugter Wärme auf zu erwärmendes Medium,
- ein Ansteuergerät (14) zur Ansteuerung des Heizgeräts (16), wobei das Ansteuergerät (14) umfasst:
- Überwachungsmittel zur Überwachung des Betriebs des Heizgeräts (12), wobei die Überwachungsmittel dazu ausgebildet sind, Information über die Gesamtbrenndauer des Brennerbereichs (16) bereitzustellen, wobei die Information über die Gesamtbrenndauer Information über die Anteile verschiedener Brennerleistungsstufen an der Gesamtbrenndauer enthält,
- Informationsmittel zum Erzeugen von eine durchzuführende Wartung betreffender Wartungsinformation in Abhängigkeit von der Überwachung, wobei die Informationsmittel dazu ausgebildet sind, die Information über die Gesamtbrenndauer mit einer Referenzgesamtbrenndauer zu vergleichen und bei Übereinstimmung Wartungsinformation zu erzeugen,
**dadurch gekennzeichnet, dass** die Referenzgesamtbrenndauer in Abhängigkeit von der Information über die Anteile verschiedener Brennerleistungsstufen festgelegt wird.

2. Fahrzeugheizsystem nach Anspruch 1,
**dadurch gekennzeichnet, dass** die Überwachungsmittel dazu ausgebildet sind, Information über die Anzahl an durch Aktivieren eines Zündorgans (22) durchgeführten Zündvorgängen bereitzustellen, und dass die Informationsmittel dazu ausgebildet sind, die Information über die Anzahl an Zündvorgängen mit einer Referenzzündvorgangsanzahl zu vergleichen und bei Übereinstimmung Wartungsinformation zu erzeugen.

3. Fahrzeugheizsystem nach einem der Ansprüche 1 oder 2,
**dadurch gekennzeichnet, dass** das Ansteuergerät (14) Wartungsanzeigeaktivierungsmittel (30) umfasst, um nach manueller Erzeugung eines Anzeigebefehls Information über den momentanen Zustand des Heizgeräts zu erzeugen.

## Claims

1. A vehicle heating system comprising:
- a heating appliance (12) with a burner zone (16) for the combustion of fuel and with a heat-exchanger zone (24) for transmitting heat generated during combustion to a medium to be heated,
- an activating device (14) for activating the heating appliance (16) [sic], the activating device (14) comprising:
- monitoring means for monitoring the operation of the heating appliance (12, wherein the monitoring means are designed to provide information on the total combustion time of the burner zone (16),wherein the information on the total combustion time includes information on the components of different burner output stages of the total combustion time,
- information media for generating maintenance information relating to maintenance to be performed, as a function of the monitoring, wherein the information media are designed to compare information on the total combustion time to a reference total combustion time and, if they correspond, to generate maintenance information,
**characterised in that** the reference total combustion time is determined as a function of information on the components of different burner output stages.

2. A vehicle heating system according to Claim 1, **characterised in that** the monitoring means are designed to provide information on the number of ignition operations performed by activating an ignition member (22), and **in that** the information medium is designed to compare information on the number of ignition operations to a reference ignition operation number and, if they correspond, to generate maintenance information.

3. A vehicle heating system according to either Claim 1 or Claim 2, **characterised in that** the activating device (14) comprises maintenance indicator activating means (30) so that, after manual generation of an indicator command, information on the instantaneous status of the heating appliance is generated.

## Revendications

1. Système de chauffage de véhicule, comprenant :
- un appareil de chauffage (12) avec un brûleur (16) pour la combustion de combustible et avec un échangeur thermique (24) pour le transfert de la chaleur produite lors de la combustion au fluide à réchauffer,
- un appareil de pilotage (14) pour piloter l'appareil de chauffage (12), l'appareil de pilotage (14) comprenant :
- des moyens de surveillance pour surveiller le fonctionnement de l'appareil de chauffage (12), les moyens de surveillance étant conçus pour mettre à disposition l'information sur la durée de combustion totale du brûleur (16), l'information sur la durée de combustion totale contenant l'information sur les participations des différents étages de puissance du brûleur à la durée de combustion totale,
- des moyens d'information pour générer l'information de maintenance concernant une maintenance à réaliser en fonction de la surveillance, les moyens d'information étant conçus pour comparer l'information sur la durée de combustion totale avec une durée de combustion totale de référence et générer l'information de maintenance en cas de conformité,
**caractérisé en ce que** la durée de combustion totale de référence est définie en fonction de l'information sur les participations des différents étages de puissance du brûleur.

2. Système de chauffage de véhicule selon la revendication 1, **caractérisé en ce que** les moyens de surveillance sont conçus pour mettre à disposition l'information sur le nombre de processus d'allumage réalisés par activation d'un organe d'allumage (22), et **en ce que** les moyens d'information sont conçus pour comparer l'information sur le nombre de processus d'allumage avec un nombre de processus d'allumage de référence et générer l'information de maintenance en cas de conformité.

3. Système de chauffage selon l'une quelconque des revendications 1 ou 2, **caractérisé en ce que** l'appareil de pilotage (14) comprend des moyens d'activation de l'affichage de maintenance (30), pour générer l'information sur l'état en cours de l'appareil de chauffage après la génération manuelle d'un ordre d'affichage.
